# EUROPEAN PATENT SPECIFICATION

(11) **EP 0 571 492 B1**
(45) Date of publication and mention of the grant of the patent: **21.12.1994**
(21) Application number: 92905480.7
(22) Date of filing: 10.02.1992
(51) Int. Cl.: B62M 9/12

(54) **A BICYCLE WITH MULTIPLYING GEARS AND FRONT GEARSHIFT**
VORDERER UMWERFER FUER EINE FAHRRADKETTENSCHALTUNG
BICYCLETTE AVEC ENGRENAGES MULTIPLICATEURS ET SYSTEME DE DERAILLEMENT A L'AVANT POUR LE CHANGEMENT DES VITESSES

(30) Priority: 11.02.1991 IT MO910018
(43) Date of publication of application: 01.12.1993
(73) Proprietor: GABRIELLI, Giuseppe, I-40136 Bologna (IT)
(72) Inventor: GABRIELLI, Giuseppe, I-40136 Bologna (IT)
(74) Representative: Lanzoni, Luciano
(86) International application number: IT9200012
(87) International publication number: WO9213751

(56) References cited:
- DE-C- 901 146
- FR-A- 971 867
- FR-A- 1 145 881
- FR-A- 2 482 039
- FR-A- 2 499 496
- FR-A- 2 640 931
- GB-A- 2 160 272

## Description

The field of the invention is that of bicycles with multiplying gears series and a front gear shift, i.e. racing, touring or special mountain bicycles, equipped with two or more multiplying gears along with a series of posterior pinions. The prior art embraces bicycles as in the preamble of claim 1, equipped with two or at most three multiplying gears and from five to eight pinions. For the changing of the chain from one to another of the pinions in the case where a change of speed is desired, the gear system is equipped with a lower posterior turnbuckle and with a cable-operating command lever situated on the side of the front inclined tube of the bicycle frame. For the moving of the upper branch of the chain between the two or three multiplying gears, there is a derailleur consisting of a pair of parallel wings, staggered in height with the outside wing higher, and posteriorly united by a bridge, which bridge constitutes the connecting rod of an articulated parallelogram, connected anteriorly to the handle and balance wheel. This parallelogram, which is transversally elongated, is supported on the seat-supporting tube of the frame. Its relative lever is activated by another cable and is positioned on the same inclined tube of the frame as the posterior gear shift lever, but on the opposite side. Adjusting screws are envisaged to demark the end run positions of the derailleur command parallelogram.

The prospect of adopting a number of multiplying gears superior to three, with the aim of widening the range of ratios and further fractioning the relative value range must be considered against the difficulty of movement of the chain upper branch for distances greater than those resulting from the side-by-side placing of the three multiplying gears, since there do not exist on the market derailleur devices capable of wider transverse runs. Also, the structure of the usual derailleur elements, having wings which are staggered in height, does not permit of transverse movements of the chain for widths greater than those indicated above , given the possible interference that would result between the lower border of the lower wing and the external surface of the multiplying gears.

A conventional transmission system for cycles is shown in FR-A-2 499 496 which discloses the using of front crowns of 39 and 52 teeth or 34 and 48 teeth, i.e. crowns differing by an high number of teeth (13 end 14 respectively).
FR-A-2 640 931 relates to a front derailleur having a pair of wings staggered in height and not at the same level.
The inner wing can slide backwardly with respect to the crown, by means of slots.

The necessity arises, therefore, of solving the technical problem of realising a bicycle which, without varying the diameter of the back wheel and the pedal crank, permits of better graduating the rider's efforts, in order to obtain a better athletic result with regard to the physical conditions of the rider him- or herself.

The principal aim of the present invention, therefore, is to provide a front gearshift which permits of moving the chain between the front multiplying gears of a series comprising more than three side-by-side multiplying gears, but also valid in the case of only two multiplying gears, for example, up to six and more, with a diminishing number of teeth with respect to the lowest gear, normally by one or two teeth but also by three or, for elevated transmission ratios, up to four or five; the number of multiplying gears thus derived from the lowest gear, that is, the fraction of multiplying gears, can be respectively one, two, three or four; the group comprising the lowest gear and one or more fraction gears constituting a gear group; the whole series of front gears possibly being constituted by one or more groups, as many as the basic gears. The difference in the number of teeth between the basic gears can be even less than the traditional value of ten, for example only five or six.

This and other aims are attained by the bicycle with multiplying gear series and front gearshift, object of the present invention, which is characterised as in claim 1, wherein at least one of front multiplying gears differs from the adjacent one by 1-5 cogs and the front gearshift may comprise a parallel couple of derailing wings at a same level.

The advantages obtained by the present invention are: the possibility of using a considerable variety of transmission ratios, having reciprocal values which are closer than those possible from the changing of the chain from one pinion to another of the back wheel having one tooth more or less; this permits of a full use of the physical capacities of the cyclist and better graduation of the cyclist's effort.

Several embodiments of the invention are illustrated by way of non-limiting examples, in the accompanying drawings, in which:

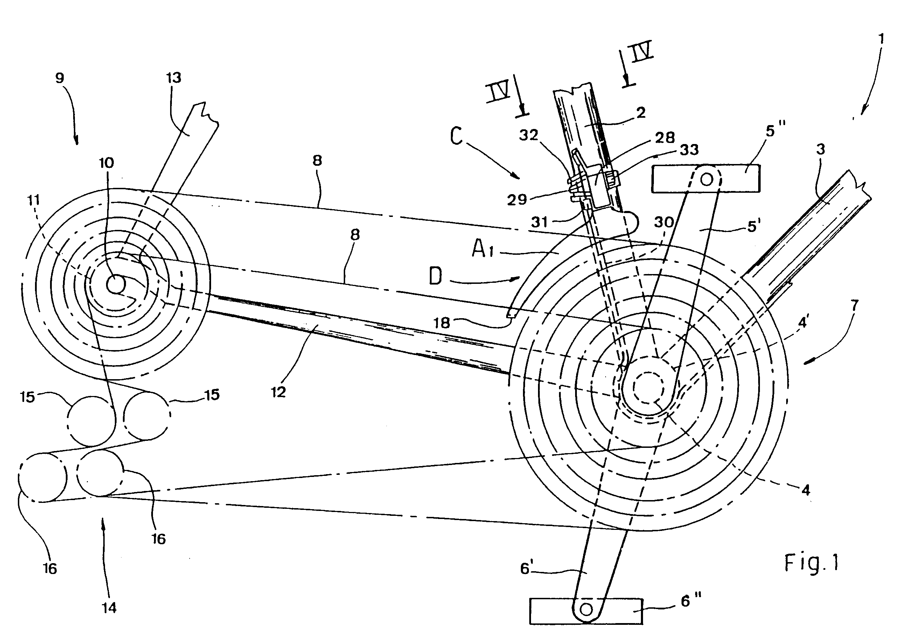

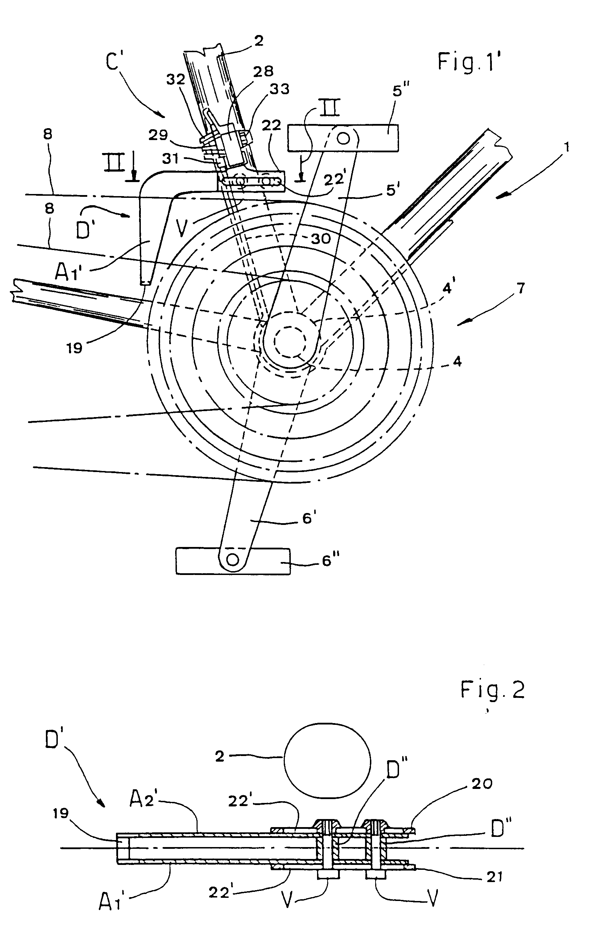

- Figure 1 is a schematic partial side-view, seen from the multiplying gear side of a multiplying gear transmission;
- Figure 1' is a partial side-view, as in figure 1, of a bicycle with multiplying gear transmission, with front gear-shift according to the invention;
- Figure 2 is an enlarged partial horizontal section II-II of figure 1;
- Figure 3 is a schematic partial longitudinal and partially sectioned front view of the multiplying gears with front gearshift of figures 1 and 2;
- Figure 4 is the transversal section according to line IV-IV of figure 1, evidencing from above the gearshift attachment;
- Figure 5 is an emlarged schematic view of the gearshift of figure 1 from the other side to that of the multiplying gears;
- Figure 6 is a partial side-view of the application part of the front gearshift according to a possible further embodiment of the invention;
   Figure 7 is a transversal vertical section of the front gearshift of figure 6, made at the axis of the chain guide wheel;
- Figure 8 is a partial side-view, like that of figure 6, but with a shock-absorbing derailleur;
- Figure 9 is the above view of figure 8;
- Figure 10 is a side-view like that of figure 6;
- Figure 11 is a schematic longitudinal view as in figure 3, in the case of a front gearshift as in figure 10.

With reference to the figures, 1 denotes the bicycle frame , constituted by the saddle-supporting tube 2 and the forward-inclined tube 3, inferiorly converging in the front hub 4', internally to which hub 4' the central axis 4 is supported in rotation: at the ends of the said central axis 4 the hubs 5 and 6 of the pedal cranks 5' and 6' are mortised, which cranks 5' and 6' support the respective pedals 5'' and 6''. 7 denotes the series of crowns, solid to the said central axis 4 and fixed to the same axis 4 in an external lateral position with respect to the front hub 4', anteriorly engaging the transmission chain 8 wound posteriorly on one of the pinions of the pinion series 9, said pinion series 9 being rotatably supported to the posterior axis 10; said posterior axis 10 is supported to the posterior ends 11 of the lower fork 12, which ends 11 are shaped like an upside down U, which lower fork's 12 front ends are fixed to the hub 4'. 13 denotes the upper posterior fork, which is fixed to the posterior end 11 of the lower fork 12; 14 denotes the posterior gearshift, with the intermediate return wheels 15 and the lower turnbuckle 16 schematically represented, said turnbuckle 16 being the variation compensator of the chain 8. C indicates the front gearshift, equipped with derailleur D with symmetrical wings, A1 and A2, having a circular crown arc form, tapered backwards, superiorly connected by means of the upper bridge with transverse flaps 17 and inferiorly by means of the bridge 18: said wings extending over an angular sector of about 60°, starting from the extreme forward position, corresponding to the position of the saddle-supporting tube 2.

In figure 1', C indicates the front gearshift in the version with derailleur D, adjustable in longitudinal direction, with symmetrical right-angled wings, external A1'and internal A2' (figure 2) inferiorly connected to the posterior bridge 19, superiorly inserted between a pair of flanks 20 and 21 on the upper bridge 22 which bridge 22 is provided with longitudinal adjustment slots 22' for the fixing of the said wings A1' and A2' by means of a pair of v-bolts in the chosen longitudinal position, which depends on the maximum diameter of the front gears, to maintain constant the distance between the engaging point of the chain with the various gears and the point of contact between the said chain and the derailleur element.

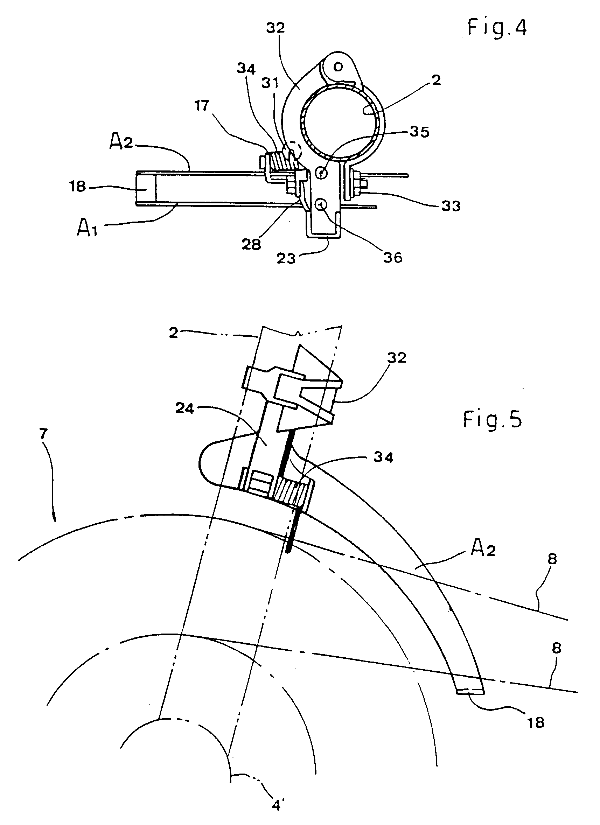

D'' denotes a pair of distancing elements for the said wings A1' and A2', inserted between these last in a coaxial position with respect to the v-bolts. The said derailleur, respectively indicated with D and D' in the fixed longitudinal and adjustable versions, functions as a connecting rod in the articulated parallelogram constituted by the upper handle 23 and the lower compensator 24, respectively hinged at their internal ends to the support 25 by means of the joint pivots 26 and 27. 28 denotes the extension of the said handle 23 on the opposite side to that of the hinging on the pivot 26; said extension 28 is for the clamp fixing of the activating cable 29 of the front gearshift C; the said cable 29 being housed internally to a protection sheath 30, arranged inferiorly to the saddle-supporting tube 2. 31 denotes an eyelet with vertical axis, for the stopping and positioning of the said sheath 30, solid to the frame 25, situated inferiorly to the end of the said extension 26 of the handle 23, which sheath 30 is equipped with an internal groove for the passage of the said cable 29. 32 indicates a screw-clamp for fixing the support 25 with respect to the saddle-supporting tube 2: 34 (fig.4) denotes the return spring for the articulated parallelogram D, 23, 24, 25, wound around the pivot housed in the front hinging flap 17 of the internal wing A2 of the derailleur D. 35 and 36 indicate a pair of screws with vertical axis, for the adjustment of the excursion of the gearshift, screwed into corresponding holes in the clamp 32. 37 denotes a crown constituted by five arms which radially extend from the hub 5 and interest respective transversal pivots 38 for the crown series 7 for the tightening of each of the threaded ends in the corresponding screws 39. 40, 41, 42, 43, 44, 45 denote the crowns constituting the series of the front gearshift, whose reciprocal position is determined by the interpositioning of ring distancers 46.

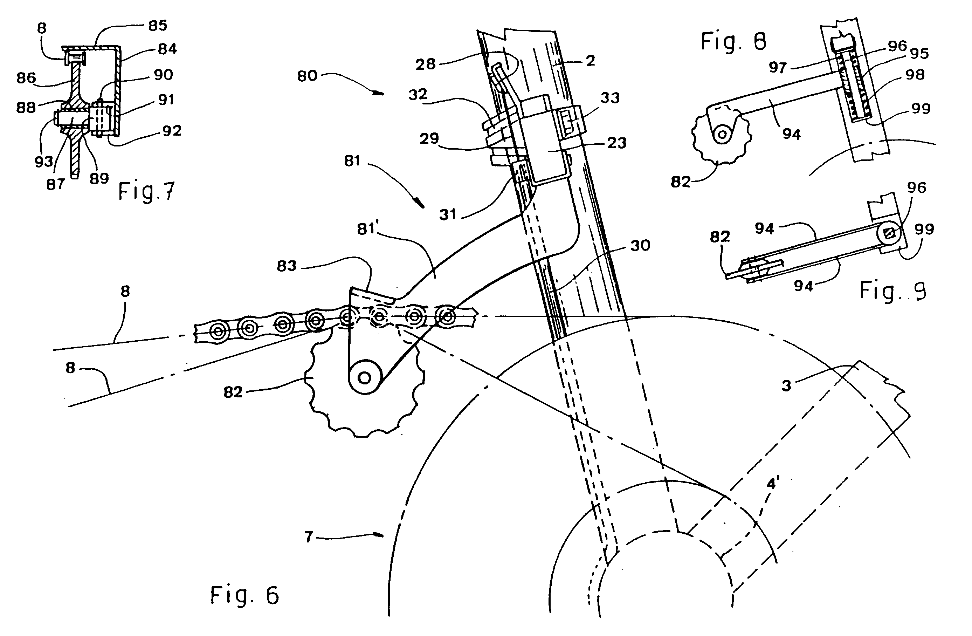

With reference to figure 6, the front gearshift 80 is denoted, constituted by a derailleur body 81, equipped with a pair of symmetrical wings 81' stretching backwards and functioning as a connecting rod with respect to the articulated parallelogram constituted by the handle 23 and the compensator 24; 82 denotes a derailleur cog wheel which interests the chain 8 from below, which cog wheel 82 is rotatably supported at the free end of the derailleur body 81. A safety bridge 83 for the disengagement of the chain 8 from the cog wheel 82 extends between the opposite wings 81' of the said derailleur 81. Figure 7 shows the posterior end 84 of the derailleur 81 body, in the single-wing version, in which version the said posterior end 84 functions as a connecting rod with respect to the articulated parallelogram constituted by the handle 23 and the compensator 24; 85 denotes the upper part of the said posterior end 84, which is bent at right angles on the said chain 8 in order to avoid its disengagement from the chain cog wheel guide 86, said guide 86 being rotatably supported to the guidable pivot 87 with the interposition of a bearing 88 projecting laterally from the support 89; A vertical axis pivot 90 for the hinging of the support 89 to the fork 89 with horizontal arms 91 and 92 fixed to the lower part of the posterior end 84 of the derailleur body 81. An elastic ring 93 prevents the axial sliding of the cog wheel guide 86 on the guidable pivot 87.

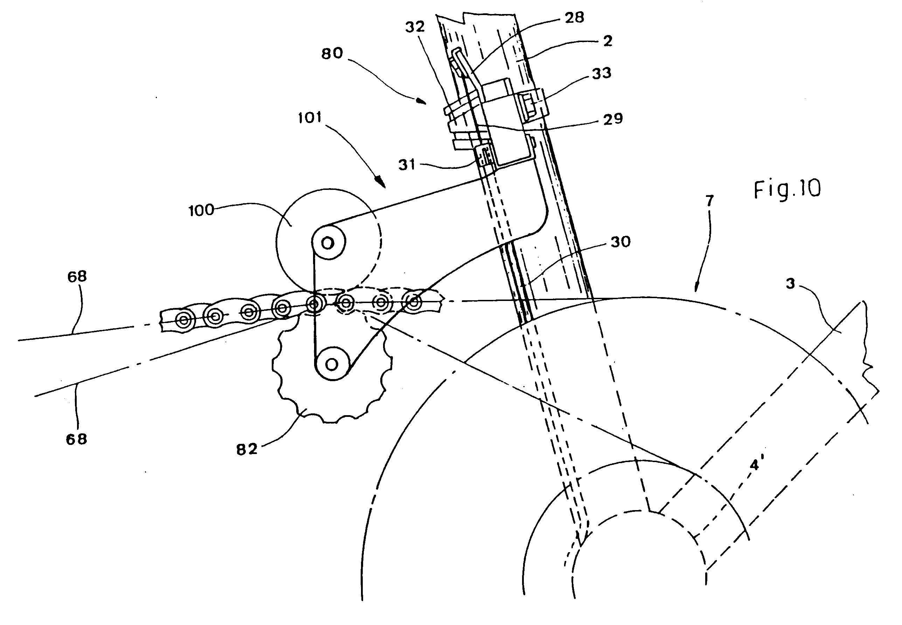

In figure 8, the pair of wings 94 of the shock-absorbing derailleur have their front ends fixed to a collar 95, which collar 95 is slidable on a stem 96 parallel to the saddle-supporting tube 2 of the bicycle frame, and which stem 96 is placed against the action of a helicoid cylindrical spring couple, one lower 98 and one upper 97, the entire above assembly being closed into a container 99 fixed inferiorly to the connecting rod of the the said articulated parallelogram with handle 23 and compensator 24. Figure 10 shows a smooth upper wheel 100, rotatably supported to the derailleur body 101, as an alternative to the safety bridge 83.

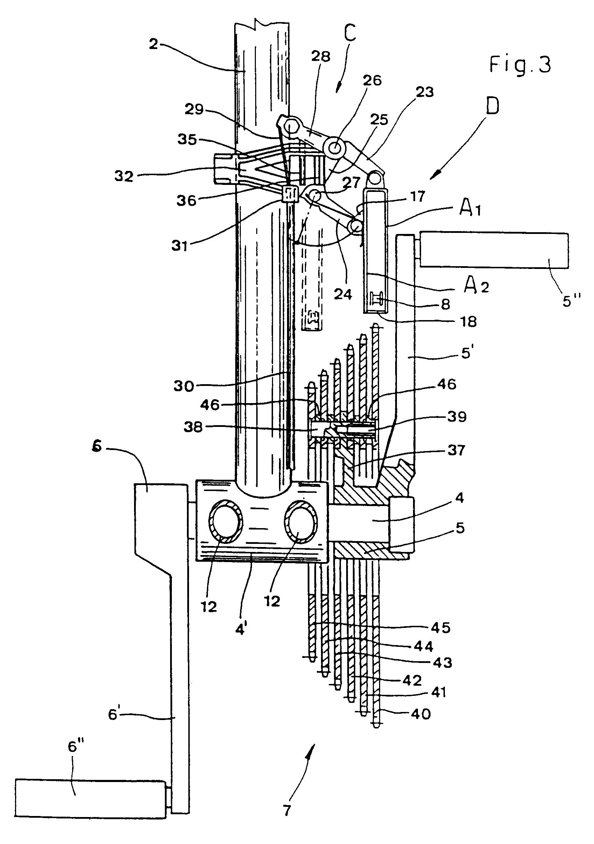

In the cases of figures 1 to 5, the functioning of the assembly is as follows: when the command cable 29 for the gearshift C is activated, the extension 28 of the handle of the articulated parallelogram D, 23, 34 and 25, is made to rotate about the pivot 26, causing a corresponding rotation of the compensator 24 and the external sliding of the connecting rod 18, 19, thus compressing the recall spring 34 and determining the sideways derailing of the chain 8, the reverse movement happening by the release of the cable 29 and the recall action of the spring 34.

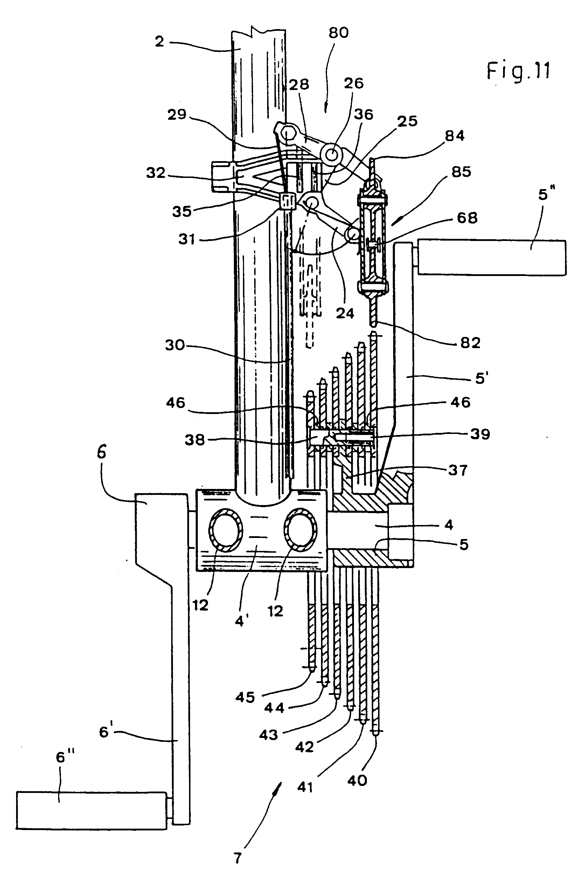

In the cases of figures 6 to 11, the transversal movement of the chain 8, wound on the cog wheel 82, supported by the wing pair 81', is brought about by the activating, by means of the cable 29, of the handle of the command parallelogram or the front gearshift, with the possible presence of an upper opposite cog wheel if the chain 8 has asymmetrical links.

The choice of the ratios to be used, which depends principally on aspects of the kind of cycling to be done, such as road surface, athlete's physical condition and suchlike, is always based on one of two basic gears, to each of which, or it least to one of which, at least one dependent gear or fractioned gear is associated, that is, a gear having a number of cogs which differs from the base gear by one, two, three, four or maximum five cogs, selecting the front gears so as to obtain transmission ratios corresponding to the posterior pinions whose number of cogs avoids repeating ratios.

The following is a series of examples of preferred ratios according to the invention, in the cases of numbers of gears and pinions technologically possible at the moment, in order to have the greatest possible number of gear ratios.

### EXAMPLE 1

### RACING AND TOURISM FOR VARIED ROUTES

| | |
|---|---|
| -posterior pinions | 12, 13, 14 ,15, 16, 17, 18, 19; |
| -posterior pinions | 12, 13, 14, 15, 16, 20, 21, 22; |
| -gears | 52, 50, 42, 40; |
| -gears | 53, 52, 51, 43, 42, 41; |

Alternatively to the base multiplying gear with 52 cogs, multiples with 53 or 54 teeth, or in any case gears which differ from those indicated by plus or minus one, two, three or four are envisaged.

### EXAMPLE 2.

### FLAT CYCLING (LONG-DISTANCE):

| | |
|---|---|
| -posterior pinions | 12, 13, 14, 15, 16; |
| -multiplying gears | 53, 52, 51, 50, 49; |

The multiplying gears can have a number of cogs which differs from those indicated by plus or minus one, two, three, or even four cogs, provided that at least one pair differ by no more than five.

### EXAMPLE 3.

### UPHILL CYCLING (STEEP INCLINATIONS):

| | |
|---|---|
| -posterior pinions | 18, 19, 20, 21, 22; |
| -multiplying gears | 42, 41, 39, 38; |

As in the previous examples, the multiplying gears can have plus or minus one, two, three or even four teeth.

### EXAMPLE 4.

### MOUNTAIN BICYCLES:

| | |
|---|---|
| -posterior pinions | 13, 15, 17, 20, 24, 28, 32; |
| -multiplying gears | 50, 48, 40, 38, 30, 28; |
| - multiplying gears | 48, 46, 38, 36, 28, 26. |

As in the previous examples, the number of teeth can vary by plus or minus one, two, three or even four teeth, provided at least one pair differs by no more than 5.

## Claims

1. A bicycle with a series of multiplying gears and front gearshift, comprising a frame (1) equipped with chain transmission with posterior gearshift, characterised in that it is equipped with at least one group (7) of front multiplying gears (7, 40, 41, 42, 43, 44, 45), at least one of which differs from the adjacent one by one, two, three, or even four or five cogs, the value of at least one of the transmission ratios being fractionary, that is intermediate between the ratio which is relative to an initial engagement and that relative to the engagement of the chain with a posterior pinion differing by only one cog.

2. A bicycle as in claim 1, wherein the said front gearshift comprises a parallel couple of derailing wings (A1 and A2, A1' and A2'), at a same level, that is not at staggered heights.

3. A bicycle as in claim 2, wherein said derailing wings, adjustable in longitudinal direction, exhibit a profile (A1', A2') substantially in the shape of a downturned "L", with the lower tract inferiorly grazing the chain (8) when the lowest-diameter multiplying gear is engaged.

4. A bicycle as in claim 2, comprising derailing wings (A1 and A2) inferiorly and superiorly connected respectively by a lower and an upper bridge, constituting a connecting rod for an articulated parellelogram, wherein to the said connecting rod of the said articulated parallelogram oscillating in the transverse plane, a derailleur body (101), also inclined parallel to a saddle-supporting tube (2), is inferiorly fixed, which derailleur body (101) is connected to a cog wheel (82) functioning as a guide for the chain (8), which chain (8) is situated above the said cog wheel (82); said cog wheel (82) being supported to a pivot, guidable in the horizontal plane containing its axis, said pivot having one end hinged to a support (89) projecting from the said derailleur body (101); a further revolving element, a smooth upper wheel (100) being arranged above the said chain (8) to contrast the disengagement of the same.

5. A bicycle as in claim 4, wherein to the said connecting rod of the said articulated parallelogram oscillating in the transversal plane, a shock-absorbing derailleur body, also inclined parallel to a saddle-supporting tube (2), is inferiorly fixed, which shock-absorbing derailleur body is connected to a revolving element (82) functioning as a guide for the chain (8), which chain (8) is situated above the said revolving element (82); the fixing of the said shock-absorbing derailleur body being obtained by means of a sliding coupling of a collar (95) solid to the front end of the said derailleur body with a stem (96) having its axis substantially parallel to the said saddle-supporting tube (2) and inserted between the bottom elements of a container (99) of the shock-absorbing device; the vertical displacement of the said collar (95) occurring against the action of a couple of cylindrical helicoid springs (97 aned 98), coaxial with the said stem (96), interpositioned between the upper surface and the lower surface of the said collar (95) and the relative bottom elements of the said container (99).

6. A bicycle as in claim 1, wherein each group of front multiplying gears is constituted by at least a basic multiplying gear and one or more fractionary multiplying gears; the fractionary multiplying gears having a number of cops which differs from the corresponding basic multiplying gear by one, two, three, four or maximum five cogs; the basic multiplying gears of different front multiplying gears differing each other by a number of cogs which is greater or equal with respect to the maximum number of multiplying gears constituting a group.

## Patentansprüche

1. Vorderer Umwerfer für eine Fahrradkettenschaltung, welcher aufweist einen Rahmen (1) mit Antriebkette mit hinterer Kettenschaltung, dadurch charakterisiert, daß der er mit zumindest einer Gruppe (7) von vorderen Übersetzungen (7, 40, 41, 42, 43, 44, 45) ausgestattet ist, von denen sich zumindest eine von den anliegenden durch einen, zwei, drei oder gar vier oder fünf Zähne unterscheidet, wobei der Wert des letzten Übersetzungsverhältnisses fraktioniert ist und wobei zwischen dem Verhältnis bezüglich des anfänglichen Schalten und bezüglich des Schaltens der Kette am hinteren Ritzel nur ein Zahn Unterschied besteht.

2. Ein Fahrrad gemäß dem Anspruch 1, wobei die genannte vordere Schaltung einen Umwerfer (A1 und A2, A1' und A2') auf dem gleichen Niveau aufweist, der sich nicht auf gestufter Höhe befindet.

3. Ein Fahrrad gemäß Anspruch 2, wobei der genannte Umwerfer in Längsrichtung verstellbar ist und ein Profil (A1', A2') aufweist, das im wesentlichen die Form eines umgekehrten "L" hat, wobei wobei der kürzere Abschnitt die Kette (8) streift, wenn die Übersetzung mit dem kleinsten Durchmesser eingeschaltet ist.

4. Ein Fahrrad gemäß Anspruch 2, das einen Umwerfer (A1 und A2) aufweist, der oben und unten durch eine obere und eine untere Brücke geschlossen ist und einen Verbindungsstab für ein Gelenk-Parallelogramm bildet, wobei der geannte Verbindungsstab des genannten Gelenk-Parallelogramms in der Querrichtung schwingt, ein Umwerferkörper (101), der ebenfalls zu dem Sattelstützrohr (2) parallel angeordnet und unterhalb befestigt ist, wobei der Umwerferkörper (101) an ein Zahnrad (82) befestigt ist, das als Führung der Kette (8) fungiert, wobei die Kette (8) oberhalb des genannten Zahnrads (82) verläuft, das von einem Bolzen getragen wird, der unter Beibehaltung seiner Achse in horizontaler Richtung geführt werden kann und wobei der genannte Bolzen an einem Ende an einer Halterung (89) befestigt ist, die gegen den genannten Umwerferkörper (101) schützt; ein weiteres drehendes Element, ein glattes oberes Rad (100), das über der genannten Kette (8) angebracht wird, um dieselbe auszukuppeln.

5. Ein Fahrrad gemäß Anspruch 4, wobei an dem genannten Verbindungsstab des genannten, in der Querrichtung schwingenden Gelenk-Parallelogramms ein stoßdämpfender Umwerferkörper befestigt ist, der ebenfalls parallel zu der Sattelstützstange (2) angeordnet und unterhalb ist, wobei der stoßdämpfende Umwerferkörper an einem drehenden Element (82) befestigt ist, das als Führung der Kette (8) fungiert, wobei die Kette (8) oberhalb des genannten drehenden Elements (82) verläuft; die Befestigung des genannten stoßdämpfenden Umwerferkörpers erfolgt durch eine verschiebbare Manschette (95), die fest mit dem Vorderende des genannten Umwerferkörpers und mit dem Schaft (96) verbunden ist, des Achse im wesentlichen parallel zu den genannten Sattelstützrohr (2) verläuft und zwischen den Bodenlementen eines Behälters (99) der stoßdämpfenden Vorrichtung eingesetzt ist; die vertikale Verschiebung der genannten Manschette (95) erfolgt durch ein Paar von zylindrischen, schraubenförmigen Federn (97 und 98), die zu dem genannten Schaft koaxial sind und sich zwischen der oberen und der unteren Fläche der genannten Manschette (95) in mit Bezug auf die Bodenelemente des genannten Behälters befinden.

6. Ein Fahrrad gemäß Anspruch 1, wobei jede Gruppe von vorderen Übersetzungen aus zumindest einer Basisübersetzung und einer oder mehreren fraktionierten Übersetzungen besteht; die fraktionierten Übersetzungen haben eine Zahl von Zähnen, die von der der Basisübersetzung um einenn, zwei, drei, vier oder maximal fünf Zähne abweicht; die Basisübersetzungen mit verschiedenen vorderen Übersetzungen unterscheiden sich voneinander dadurch, daß die Anzahl der Zähne größer oder gleich hinsichtlich der maximalen Anzahl der die Gruppe bildenden Übersetzungen ist.

## Revendications

1. Une bicyclette avec une série d'engrenages multiplicateurs et un système de déraillement antérieur qui comprend un cadre (1) équipé d'une transmission par chaîne avec un système de déraillement postérieur, caractérisée en ce fait qu'elle est équipée d'un groupe au moins (7) d'engrenages multiplicateurs antérieurs (7, 40, 41, 42, 43, 44, 45), un de ceux-ci au moins diffère de celui qui est adjacent par un, deux, trois, ou même quatre ou cinq dents, la valeur d'au moins un des rapports de transmission étant fractionnaire, c'est-à-dire intermédiaire entre le rapport qui est relatif à un engagement initial et celui qui est relatif à l'engagement de la chaîne avec un pignon postérieur qui ne diffère que d'une dent.

2. Une bicyclette comme celle de la revendication 1, sur laquelle le système de déraillement antérieur comprend un couple parallèle d'ailes de déraillement (A1 et A2, A1' et A2'), à un même niveau, c'est-à-dire à des hauteurs qui ne sont pas décalées.

3. Une bicyclette comme celle de la revendication 2, sur laquelle lesdites ailes de déraillement, réglables dans la direction longitudinale, présentent un profil (A1', A2') ayant en substance la forme d'un "L" tourné vers le bas, avec la partie la plus basse qui effleure par dessous la chaîne (8) quand est engagé l'engrenage multiplicateur dont le diamètre est le plus petit.

4. Une bicyclette comme celle de la revendication 2, qui comprend des ailes de déraillement (A1 et A2) reliées au-dessous et au-dessus respectivement par un pont inférieur et par un pont supérieur, qui constituent une bielle de liaison pour un parallélogramme articulé, sur laquelle, à ladite bielle de liaison dudit parallélogramme articulé qui oscille sur un plan transversal, est fixé par dessous un corps de dérailleur (101), lui aussi incliné parallèlement au tube (2) qui supporte la selle, ce corps de dérailleur (101) est relié à une roue dentée (82) qui fonctionne comme guide pour la chaîne (8), cette chaîne (8) est située au-dessus de ladite roue dentée (82); ladite roue dentée (82) étant supportée sur un pivot, et pouvant être guidée sur le plan horizontal qui contient son axe, ledit pivot ayant une extrémité articulée sur un support (89) qui fait saillie par rapport audit corps de dérailleur (101); un autre élément tournant, une roue supérieure lisse (100) étant disposée au-dessus de ladite chaîme (8) pour contraster le désengagement de cette dernière.

5. Une bicyclette comme celle de la revendication 4, sur laquelle, à ladite bielle de liaison dudit parallélogramme articulé qui oscille sur le plan horizontal, est fixé par dessous un corps de dérailleur qui absorbe les secousses, et qui est, lui aussi, incliné parallèlement au tube (2) qui supporte la selle, ce corps de dérailleur qui absorbe les secousses est relié à un élément tournant (82) qui fonctionne comme guide pour la chaîne (8), cette chaîne est située au-dessus dudit élément tournant (82); la fixation dudit corps de dérailleur qui absorbe les secousses étant obtenue au moyen de l'accouplement à glissière d'un collier (95) solidaire avec l'extrémité antérieure dudit corps de dérailleur avec une tige (96) dont l'axe est en substance parallèle audit tube (2) qui supporte la selle et inséré entre les éléments du fond d'un conteneur (99) du dispositif qui sert à absorber les secousses; le déplacement vertical dudit collier (95) se produisant contre l'action d'un couple de ressorts hélicoïdaux cylindriques (97 et 98), coaxial par rapport à ladite tige (96), positionné entre la surface supérieure et la surface inférieure dudit collier (95) et les éléments relatifs du fond dudit conteneur (99).

6. Une bicyclette comme celle de la revendication 1, sur laquelle chaque groupe d'engrenages multiplicateurs antérieurs est constitué par un engrenage multiplicateur de base au moins et un ou plusieurs engrenages multiplicateurs fractionnaires; les engrenages multiplicateurs fractionnaires ayant un nombre de dents qui diffère de l'engrenage multiplicateur de base correspondant par une, deux, trois, quatre ou au maximum cinq dents; les engrenages multiplicateurs de base des différents engrenages multiplicateurs antérieurs différant les uns des autres par un nombre de dents qui est plus grand ou égal par rapport au nombre maximum d'engrenages multiplicateurs qui constituent un groupe.
